# EUROPÄISCHE PATENTANMELDUNG

(11) **EP 4 520 728 A1**
(43) Veröffentlichungstag der Anmeldung: **12.03.2025**
(21) Anmeldenummer: 24198895.5
(22) Anmeldetag: 06.09.2024
(51) Int. Cl.: C02F 1/00, C02F 1/28, C02F 1/42

(54) **WASSERFILTER UND VERFAHREN ZUM BETREIBEN EINES WASSERFILTERS**

(30) Priorität: 07.09.2023 DE 102023124150
(71) Anmelder: Aquis Systems AG, 9445 Rebstein (CH)
(72) Erfinder: Huck, Kai, 9428 Walzenhausen (CH); Gröning, Ingolf, 97980 Bad Mergentheim (DE)
(74) Vertreter: Zimmermann & Partner Patentanwälte mbB

(57) **Zusammenfassung**

Wasserfilter zum Filtern von Wasser, insbesondere zum Filtern von Wasser in einem Haushalt und/oder insbesondere zum Filtern von Wasser mit einer maximalen Durchflussrate von 20l/min, mit einem Filterhalter mit einem Positionssensor und einen mit dem Filterhalter koppelbaren Behälter. Der Behälter beinhaltet ein relativ zu einer Behälteröffnung des Behälters bewegbares Durchtrittselement mit einer Durchtrittsöffnung, eine Zuführung zur Zuführung von Wasser zu dem Durchtrittselement, eine Verstelleinrichtung zum verstellbaren Positionieren des Durchtrittselements mit der Durchtrittsöffnung relativ zu dem Behälter mit der Behälteröffnung und einen Geber. Der Geber ist für ein Zusammenwirken mit dem Positionssensor eingerichtet, so dass der Positionssensor eingerichtet ist, um ein Positionssignal auszugeben, welches indikativ für eine Position des Durchtrittselements mit der Durchtrittsöffnung ist. Das Durchtrittselement ist dazu eingerichtet, in Abhängigkeit der Position der Verstelleinrichtung die Relation zwischen einer ersten Durchflussrate durch das erste Filterelement und einer zweiten Durchflussrate durch das zweite Filterelement einzustellen. Die erste Durchflussrate und die zweite Durchflussrate sind in einem beliebig einstellbaren Verhältnis einstellbar.

## Beschreibung

### Technisches Gebiet:

Die Erfindung betrifft einen Wasserfilter und ein Verfahren zum Betreiben eines Wasserfilters. Insbesondere betrifft die Erfindung einen Wasserfilter mit einem Geber und einem Sensor zum Erfassen einer Position eines Durchtrittselements, insbesondere zur Ermittlung eines Verschnittgrads des gefilterten Wassers.

### Stand der Technik:

Aus dem Stand der Technik sind Wasserfiltersysteme bekannt, die Leitungswasser durch ein Durchführen durch unterschiedliche andere Stoffe filtern und/oder Kalk durch andere Maßnahmen, beispielsweise durch chemische Reaktionen, aus dem Wasser entfernen.

Aus dem Stand der Technik sind Wasserfilter bekannt, die eine eindeutige Kennung aufweisen (z.B. RFID), mit der der Wasserfilter vom Gerät eindeutig identifiziert werden kann. Auch ist bekannt, dass diese eindeutigen Kennungen vom Gerät mit zusätzlichen Informationen beschrieben werden können, wie zum Beispiel dem Nutzungsgrad oder der Nutzungsdauer.

Aus dem Stand der Technik ist bekannt, dass diese Wasserfiltersysteme eine Möglichkeit haben, um einen definierten Verschnittgrad einzustellen. Unter Verschnittgrad wird verstanden, welcher Anteil an beispielsweise ungefiltertem Rohwasser dem gefilterten Wasser wieder beigemischt wird, damit die Wasserhärte und der pH-Wert des Wassers für direkt konsumiertes Trinkwasser geeignet ist.

In bekannten Wasserfiltern wird das Wasser im Wasserfilter oft über die gesamte Strecke an lonentauscherharz geleitet, so dass in Abhängigkeit von dem Härtegrad des Wassers am Eingang eine zu weitgehende Demineralisierung auftreten kann, was durch die Beimischung von Rohwasser wieder kompensiert wird. Dieser Verschnittprozess findet in der Regel im Filterhalter statt, indem beispielsweise ein Einstellelement von innen oder von außen verstellt wird.

Besonders nachteilig bei der Lösung ist, wenn durch den Verschnittprozess dem gefilterten Wasser wieder Rohwasser beigefügt wird, welches Partikel, Schwermetalle oder Mikroplastik enthalten kann, so dass auch das gefilterte Wasser wieder diese Schadstoffe enthält.

Ein weiterer Nachteil ist, dass die Nutzungsdauer des Wasserfilters nicht abhängig ist von der zumeist rein mechanischen Einstellung des Verschnittgrads im Filterhalter. Somit wird, insbesondere bei weicherem Wasser, bei dem ein hoher Verschnittgrad gewählt werden muss, das lonentauscherharz nur von einem im Verhältnis geringen Volumenstrom durchflossen, so dass viel lonentauscherharz beim Ablauf der Filternutzung noch unverbraucht ist. Dadurch werden viele Ressourcen verschwendet.

### Offenbarung der Erfindung:

Aufgabe der Erfindung ist es, die Probleme aus dem Stand der Technik, zumindest teilweise, zu lösen. Insbesondere ist es Aufgabe der Erfindung, einen Wasserfilter und ein Verfahren zum Betreiben eines Wasserfilters anzugeben, welche vorteilhafterweise das Betreiben des Wasserfilters in Abhängigkeit eines einstellbaren Verschnittgrads ermöglicht.

Die Aufgabe wird mit einem Wasserfilter nach dem Anspruch 1 sowie einem Filtersystem und einem Verfahren zum Betreiben eines Wasserfilters nach den nebengeordneten Ansprüchen gelöst. Vorteilhafte Weiterbildungen und Ausführungsformen ergeben sich aus den Unteransprüchen und aus dieser Beschreibung.

Ein erster Aspekt der Erfindung betrifft einen Wasserfilter zum Filtern von Wasser, insbesondere zum Filtern von Wasser in einem Haushalt und/oder insbesondere zum Filtern von Wasser mit einer maximalen Durchflussrate von 20l/min, mit einem Filterhalter mit einem Positionssensor und einen mit dem Filterhalter koppelbaren Behälter. Der Behälter beinhaltet ein relativ zu einer Behälteröffnung des Behälters bewegbares Durchtrittselement mit einer Durchtrittsöffnung, eine Zuführung zur Zuführung von Wasser zu dem Durchtrittselement, eine Verstelleinrichtung zum verstellbaren Positionieren des Durchtrittselements mit der Durchtrittsöffnung relativ zu dem Behälter mit der Behälteröffnung und einen Geber. Der Geber ist für ein Zusammenwirken mit dem Positionssensor eingerichtet, so dass der Positionssensor eingerichtet ist, um ein Positionssignal auszugeben, welches indikativ für eine Position des Durchtrittselements mit der Durchtrittsöffnung ist. Der Behälter beinhaltet ein erstes Filterelement mit einer ersten Filterfunktion und ein zweites Filterelement mit einer von der ersten Filterfunktion unterschiedlichen zweiten Filterfunktion. Das Durchtrittselement ist dazu eingerichtet, in Abhängigkeit der Position der Verstelleinrichtung die Relation zwischen einer ersten Durchflussrate durch das erste Filterelement und einer zweiten Durchflussrate durch das zweite Filterelement einzustellen. Die erste Durchflussrate und die zweite Durchflussrate sind in einem beliebig einstellbaren Verhältnis einstellbar.

Ein weiterer Aspekt der Erfindung betrifft ein Verfahren zum Betreiben eines Wasserfilters gemäß einem der hierin beschriebenen Ausführungsformen und/oder Aspekte. Das Verfahren beinhaltet das Einstellen einer Position des Durchtrittselements mit der Durchtrittsöffnung relativ zu dem Behälter mit der Behälteröffnung zur Anpassung des Wasserfilters und das Ermitteln der Position des Durchtrittselements mit dem Positionssensor.

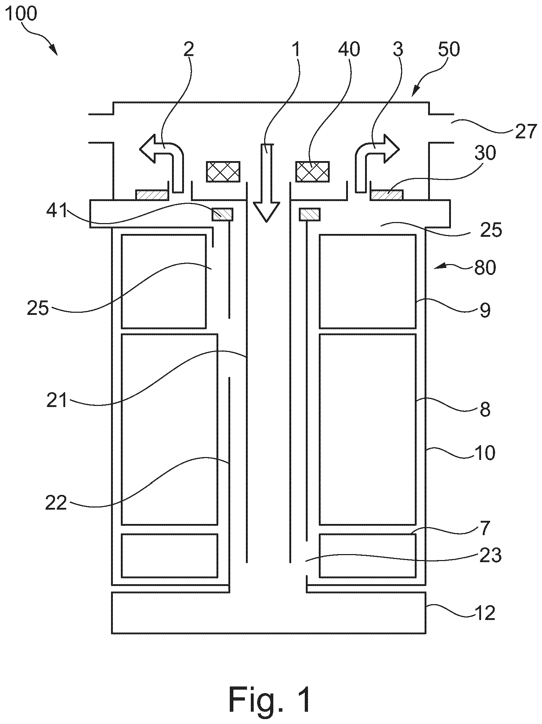

Gemäß einem Aspekt ist ein Wasserfilter beschreiben. Bei dem Wasserfilter kann es sich um eine Weiterbildung des Wasserfilters handeln, welcher in der Anmeldung mit dem Aktenzeichen 10 2023 118 228.5, eingegangen beim deutschen Patent- und Markenamt am 10.07.2023, beschrieben ist. Insbesondere kann es sich um eine Weiterbildung des in Fig. 1 des Dokuments gezeigten und beschriebenen Wasserfilters handeln. Auf das Dokument wird in dieser Hinsicht Bezug genommen und dessen Inhalt wird hiermit in diese Anmeldung aufgenommen. Ein Material des Wasserfilters, insbesondere des Behälters und/oder des Filterhalters, ist für die vorliegende Erfindung nicht essentiell.

Vorteilhafterweise kann in Ausführungsformen durch den Verzicht auf den Verschnitt mit Rohwasser bei einstellbarer Demineralisierung die vollständige Filterung des Wassers und damit die Abwesenheit von Sedimenten, Schwermetallen und/oder Mikroplastik sichergestellt werden.

Vorteilhafterweise kann in Ausführungsformen durch eine Detektion der Position des Durchtrittselements die eingestellte Position des Durchtrittselements detektiert werden. Vorteilhafterweise kann die Detektion berührungslos und/oder automatisch erfolgen. Insbesondere kann durch die Detektion der Position der tatsächliche Verbrauch eines oder mehrerer Filterelemente des Wasserfilters ermittelt werden. Vorteilhafterweise kann die Restlebensdauer des Wasserfilters und/oder der Filterelemente des Wasserfilters genauer ermittelbar sein.

Vorteilhafterweise kann in Ausführungsformen durch die einfache Einstellung des Härtegrads durch den Benutzer durch ein Einstellrad, welches auch einfach zugänglich ist, die Kapazität des Filters vollständig ausgenutzt werden. Insbesondere können Ressourcen geschont werden.

Vorteilhafterweise können in Ausführungsformen Werte, insbesondere Behälterwerte und/oder Behälterverbrauchswerte, in einen Transponder des Behälters geschrieben werden. Dadurch kann die Kapazität des Filters, insbesondere eine Rest-Kapazität des Filters, auch bei einem Wechsel des Filters in ein anderes Gerät oder bei einem temporären Einsatz eines anderen Filters genutzt werden.

### Kurze Beschreibung der Zeichnungen:

Nachfolgend wird die vorliegende Erfindung anhand der beiliegenden Zeichnungen näher erläutert, wobei die Figuren zeigen:
- Fig. 1: eine schematische Ansicht eines Wasserfilters gemäß einer typischen Ausführungsform,
- Fig. 2: ein Verfahren zum Betreiben eines Wasserfilters gemäß einer typischen Ausführungsform, und
- Fig. 3: einen Behälter für einen Wasserfilter.

### Beschreibung von Ausführungsbeispielen:

Nachfolgend werden typische Ausführungsformen der Erfindung anhand der Figuren beschrieben, wobei die Erfindung nicht auf die Ausführungsbeispiele beschränkt ist, vielmehr wird der Umfang der Erfindung durch die Ansprüche bestimmt. Bei der Beschreibung der Ausführungsform werden unter Umständen in verschiedenen Figuren und für verschiedene Ausführungsformen gleiche Bezugszeichen für gleiche oder ähnliche Teile verwendet, um die Beschreibung übersichtlicher zu gestalten. Dies bedeutet jedoch nicht, dass entsprechende Teile der Erfindung auf die in den Ausführungsformen dargestellten Varianten beschränkt sind. Soweit hierin der Begriff "oder" ohne weitere Angaben verwendet wird, gilt dieser als "und/oder", soweit sich aus dem Zusammenhang nicht etwas anderes ergibt.

Fig. 1 zeigt ein Ausführungsbeispiel eines Wasserfilters 100 in einer schematischen Ansicht. Der Wasserfilter umfasst einen Eingang 1 für ungefiltertes Wasser, das von dem Eingang in eine Zuführung 21 gelangt. Die Zuführung ist zylinderförmig und erstreckt sich mittig entlang einer Öffnung in einem Behälter 80, in welchem verschiedene Filterelemente, konkreter Partikelfilter 7, Carboblock 8 und Tauschharz 9 angeordnet sind.

Weiterhin erstreckt sich koaxial um die Zuführung 21 herum ein Durchtrittselement 22 mit Durchtrittsöffnungen. Der Behälter 80 weist mittig entlang einer Mittelachse eine Öffnung auf. Typische Wasserfilter umfassen einen Behälter mit einer durchgehenden Öffnung, welche durch eine Innenwandung des Behälters gebildet wird, wobei die Behälteröffnungen in der Innenwandung vorgesehen sind. Typische Innenwandungen sind zylinderförmig. Typische Abdeckungen von Ausführungsformen weisen eine mittige Öffnung auf. Typische Behälter von Ausführungsformen sind zylinderförmig, konisch oder topfförmig.

Typische Zuführungen weisen ein Zuführrohr auf, welches koaxial zu dem Behälter oder zu dem Durchtrittselement angeordnet ist. Typische Durchtrittselemente sind zylinderförmig, wobei die Durchtrittsöffnungen in der Mantelfläche vorgesehen sind. Durch das Positionieren von Dichtungen, wie etwa O-Ringen oder Gleitringdichtungen (nicht gezeigt), zwischen der Zuführung 21 und dem Durchtrittselement 22 kann der Wasserfluss von dem Eingang 1 über die jeweiligen Filterelemente hin zu der jeweiligen Ausgänge 2, 3 definiert sein.

Typische Wasserfilter eignen sich insbesondere zum Filtern von Wasser in einem Haushalt oder insbesondere zum Filtern von Wasser mit einer maximalen Durchflussrate von 50l/min oder maximal 20l/min. Typischerweise ist ein Behälter zur Aufnahme von Filterelementen vorgesehen und eine Zuführung zur Zuführung von Wasser zu einem Durchtrittselement.

Das Durchtrittselement 22 weist typischerweise eine Mehrzahl von Durchtrittsöffnungen auf, wobei in dem Behälter eine Mehrzahl von Behälteröffnungen vorgesehen sind. Durch geeignete Positionierung der Durchtrittsöffnungen relativ zu den Behälteröffnungen ist es möglich, verschiedene Pfade für das Wasser durch den Filter einzustellen oder relative Durchflussmengen durch verschiedene Filterelemente zu stellen. Es können auch Pfade einstellbar sein, bei welchen das durch den Filter strömende Wasser nicht alle der Filterelemente oder bei manchen Ausführungsformen gar kein Filterelement durchströmt. Zum Verstellen des Durchtrittselements weisen typische Ausführungsformen eine Verstelleinrichtung zum verstellbaren Positionieren des Durchtrittselements relativ zu dem Behälter auf. Optional kann diese Einstellung auch durch eine verschiebbare Lochplatte zwischen den unterschiedlichen Filterelementen erreicht werden, die gegen eine feststehende Lochplatte verdreht oder verschoben wird.

Bei der Ausführungsform der Fig. 1 ist an einem unteren Ende des Durchtrittselements 22 ein Einstellrad 12 vorgesehen, mit welchem sich die Winkellage des zylinderförmigen Durchtrittselements 22 relativ zu dem Behälter 80 einstellen lässt. Insbesondere kann die Verstelleinrichtung dazu eingerichtet sein, das Durchtrittselement 22 relativ zu der Behälteröffnung durch Drehung um eine Achse, beispielsweise einer konzentrischen und/oder mittigen Achse des Behälters, verstellbar zu positionieren. Dadurch wird die Lage von Durchtrittsöffnungen 23 des Durchtrittselements 22 relativ zu Behälteröffnungen 25 des Behälters verstellt. Durch einen teilweisen Verschnitt der Öffnungen kann der Querschnitt für das durchströmende Wasser eingestellt werden.

Das Einstellrad 12 ist bei typischen Ausführungsformen unterhalb des Behälters angeordnet. Dabei sind «oben» und «unten» lediglich als Bezeichnungen zur Unterscheidung der Lage am Wasserfilter zu verstehen, der Wasserfilter kann auch liegend oder kopfüber verwendet werden.

Der Wasserfilter 100 der Fig. 1 weist wie typische Ausführungsformen eine Abdeckung auf, welche den Behälter 80 insbesondere an einem oberen Ende, also gegenüberliegend zum Einstellrad 12, verschließt.

Wie in der Ausführungsform der Fig. 1 ist bei typischen Ausführungsformen die Abdeckung mit dem Behälter 80 derart verbunden, dass ein zerstörungsfreies Lösen der Abdeckung von dem Behälter 80 nur unter Einsatz eines Werkzeugs möglich ist. Typischerweise ist das Werkzeug ein Spezialwerkzeug. Spezialwerkzeuge zeichnen sich beispielsweise dadurch aus, dass mit ihnen Rastnasen oder allgemeiner Befestigungsmittel gelöst werden können, welche mit typischen genormten Werkzeugen nicht einfach oder nicht bestimmungsgemäß lösbar sind. Typische Verbindungen können wie in der Fig. 1 bspw. ein nur sehr schematisch dargestellter Verbindungsrand des Behälters 10 mit einem Bajonettverschluss mit einer Rastnase sein.

Bei Ausführungsvarianten ist zwischen der Abdeckung des Filters und dem Behälter noch ein Sicherungselement vorhanden, welches bei einem Öffnen der Verbindung zwischen Abdeckung und Behälter bricht, so dass mit dem Element eine gesicherte formschlüssige Verbindung vorhanden ist, die nach einem Öffnen, beispielsweise durch Unbefugte, sicherstellen kann, dass keine erneute formschlüssige Verbindung wieder hergestellt werden kann. Eine erneute Herstellung einer formschlüssigen Verbindung ist bei typischen Ausführungsformen dann nur durch Ersatz möglich.

Typischerweise sind in der Abdeckung ein erster Ausgang und ein zweiter Ausgang vorgesehen.

Die Abdeckung der Ausführungsform der Fig. 1 weist einen ersten Ausgang 2 und einen zweiten Ausgang 3 auf. Die Ausgänge 2 und 3 dienen dazu Wasser aus jeweiligen stromaufwärts der Ausgänge 2 und 3 gelegenen Räume auszulassen.

Durch den Wasserfilter 100 der Fig. 1 verlaufen bei der gezeigten Einstellung des Einstellrades 12 zwei Pfade für das zu filternde Wasser: Ein erster Pfad verläuft beispielsweise durch alle Filterelemente, insbesondere den Partikelfilter 7, den Carboblock 8 und das Tauschharz 9. Ein zweiter Pfad verläuft beispielsweise durch nur einen Teil der Filterelemente, insbesondere den Partikelfilter 7 und den Carboblock 8, nicht jedoch das Tauschharz 9. Beide Pfade beginnen am Eingang 1, verlaufen durch die Zuführung 21 und weiter durch Durchtrittsöffnung(en) 23 des Durchtrittselements 22, durch Behälteröffnungen 25 und den Behälter 80. Der erste Pfad endet an dem ersten Ausgang 3, und der zweite Pfad an dem zweiten Ausgang 2. Je nach Einstellung des Einstellrades 12 können die jeweiligen Anteile von Wasser, welche bestimmte der Filterelemente durchfließen, eingestellt werden.

Bei typischen Ausführungsformen sind dem ersten Ausgang und dem zweiten Ausgang jeweils zumindest teilweise verschiede Pfade für Wasser durch den Behälter und darin angeordneten Filterelementen zuordenbar. Insbesondere sind die Pfade durch Positionieren des Durchtrittselements, insbesondere mittels des Einstellelements oder Einstellrades einstellbar.

Bei Ausführungsvarianten sind zwei Ausgänge bei einem Eingang vorhanden, wobei der Wasserfilter derart eingerichtet ist, dass an einem ersten Ausgang immer Wasser zur Verfügung steht, welches nur durch einen Teil der Filterelemente oder nur durch bestimmte, aber nicht alle, Typen der Filterelemente, beispielsweise nur Partikelfilter und Carboblock, gefiltert wird. An einem zweiten Ausgang steht bei typischen Ausführungsformen von Wasserfiltern Wasser zur Verfügung, welches zumindest teilweise durch mindestens ein weiteres Filterelement oder durch alle Typen von Filterelementen, beispielsweise zusätzlich durch das Tauscherharz, geführt wird. Dabei kann der Anteil des Wassers, der durch das weitere Filterelement oder durch alle Typen der Filterelemente zu dem zweiten Ausgang geführt wird, einstellbar sein. Vor dem zweiten Ausgang wird typischerweise dieser Anteil wieder mit dem übrigen Wasser gemischt. Der Wasserfilter ist typischerweise eingerichtet, so dass er sowohl Wasser für Carbonisierungsanlagen als auch Wasser für Erhitzungsanlagen zur Verfügung stellen kann. Dabei wird die Wasserhärte des Wassers für Erhitzungsanlagen typischerweise durch den Filter reduziert, zumindest soweit dies notwendig ist.

Bei Ausführungsvarianten sind der Eingang und die Ausgänge im Auslieferzustand versiegelt, so dass auch bei längerer Lagerung die Hygiene eingehalten wird. Typischerweise ist das Siegel, mit welchem der Eingang und die Ausgänge versiegelt werden, so eingerichtet, dass es beim Einsetzen des Wasserfilters in einen Filterkopf automatisch durchbrochen wird.

Bei typischen Wasserfiltern sind wie in der Fig. 1 gezeigt die Zuführung, die Abdeckung und der Behälter konzentrisch zu einer mittigen Achse angeordnet. Dies ermöglicht einen kompakten Aufbau.

Typischerweise umfasst der Behälter einen Behälterausgang, welcher unabhängig von einer Position des Durchtrittselements mit zumindest dem ersten Ausgang oder dem zweiten Ausgang verbunden ist.

In der Fig. 1 weist der Behälter 80 einen Behälterausgang 27 auf, welcher auf einer Oberseite des Behälters angeordnet ist. Der Behälterausgang 27 ist derart vorgesehen, dass Wasser aus dem Behälter unabhängig von der Stellung des Durchtrittselements 22 in den Raum stromaufwärts des Ausgangs 3 zu leiten. Dies ist ein Teil des zweiten Pfads. Bei dem zweiten Pfad werden so alle Filterelemente oder alle Typen von Filterelementen durchlaufen.

Bei typischen Wasserfiltern ist zwischen dem Durchtrittselement und der Zuführung ein Zwischenraum vorgesehen, wobei zwischen dem Durchtrittselement und dem Behälter eine Mehrzahl von Dichtungen vorgesehen sind. Insbesondere sind bei Ausführungsformen die Dichtungen derart angeordnet, so dass je nach Einstellung des Durchtrittselements ein Ausleiten von Wasser aus einer Behälteröffnung und durch eine Durchtrittsöffnung in den Zwischenraum möglich ist.

Der Zwischenraum zwischen dem Durchtrittselement 22 und der Zuführung 21 ist bei typischen Ausführungsformen wie in der Fig 1. gegenüber der Zuführung 21 mit einer Zuführdichtung abgedichtet. Dadurch wird ein direkter Übertritt von Wasser aus der Zuführung 21 in den Zwischenraum verhindert.

Bei typischen Ausführungsformen sind die Durchtrittsöffnungen, die Behälteröffnungen und die Dichtungen derart angeordnet, dass Wasser aus dem Behälter nach Durchlaufen beispielsweise nur eines Filterelements oder nicht aller Filterelemente wieder aus dem Behälter herausgeleitet wird in einen durch Dichtungen abgegrenzten Bereich des Zwischenraums. Zumindest einer dieser Bereiche kann mit zumindest einem der Ausgänge verbunden sein, so dass auf diese Weise ein Bypass herstellbar ist, der zumindest eines der Filterelemente des Wasserfilters umgeht. Durch Einstellen des Durchtrittselements relativ zu dem Behälter mittels der Einstelleinrichtung oder des Einstellrads kann zumindest ein Anteil des Wassers über diesen Bypass geleitet werden.

Typische Wasserfilter umfassen einen an dem Behälter angeordneten Verbindungsrand, der insbesondere an einem oberen Rand des Behälters angeordnet ist. Der Verbindungsrand kann Ausnehmungen oder Vorsprünge zur Befestigung des Behälters an einem Filterkopf aufweisen. Auf diese Weisen werden Gewichtskräfte und zumindest ein Teil der Reaktionskräfte des Wasserdrucks direkt in den Filterkopf eingeleitet. Die formschlüssige Verbindung zwischen der Abdeckung und dem Behälter wird nicht von der Gewichtskraft belastet.

Ausführungsformen der Erfindung umfassen auch Filtersysteme mit einem Wasserfilter in einem der hierin beschriebenen Ausführungsformen und einem Filterkopf 50, an welchem der Wasserfilter lösbar befestigbar ist. Die lösbare Befestigung kann beispielsweise derart eingerichtet sein, dass sie durch eine Drehbewegung oder durch eine Kippbewegung, insbesondere ohne Werkzeug lösbar ist.

Ein typisches Beispiel eins Filterhalters 50 und/oder Filterkopfs, der für den Wasserfilter 100 der Fig. 1 geeignet ist, ist in der Fig. 1 gezeigt. Der Filterhalter verlängert den Eingang 1 und die Ausgänge 2 und 3 des Wasserfilters durch sein Gehäuse hindurch. Der Filterhalter 50 wird oben auf den Wasserfilter aufgesetzt und befestigt, oder der Behälter wird an dem Filterhalter 50 befestigt. Dabei greifen in an sich bekannter Art und Weise Endstücke von Rohren bspw. der Abdeckung mit entsprechenden Aufnahmen (nicht gezeigt) des Filterhalter 50 zusammen, wenn der Wasserfilter 100 in den Filterhalter eingesetzt wird.

Der Filterhalter 50 wird an dem Verbindungsrand des Wasserfilters 100 befestigt und nimmt so die Gewichtskraft und teilweise Reaktionskräfte auf Grund des Wasserdrucks direkt auf. Die Befestigung erfolgt mittels des Verbindungsrandes mit einer Art Bajonettverbindung, welche auch durch einen Nutzer lösbar ist.

Die lösbare Verbindung bietet den Vorteil, dass ein Nutzer den Wasserfilter lösen kann, an eine Servicestelle übergeben kann, wobei dort die Abdeckung entfernt wird und die Filterelemente ausgetauscht werden können. Dies garantiert eine zuverlässige Wartung des Wasserfilters.

Typische Verfahren zum Betreiben des typischen Wasserfilters 100 umfasst ein Einstellen einer Position des Durchtrittselements 22 mit den Durchtrittsöffnungen 23 relativ zu dem Behälter 80 mit den Behälteröffnungen 25 zur Anpassung des Wasserfilters an ein zu erwartendes Wasser am Einbauort. Durch die Einstellung werden die Durchflussquerschnitte der kombinierten Öffnungen von Durchtrittsöffnungen und Behälteröffnungen eingestellt, so dass ein ausreichender Anteil des Wassers bspw. durch das Tauscherharz geleitet wird.

Wie in Fig. 1 gezeigt umfasst der Behälter 80 einen Geber 41. Der Geber kann an einer dem Filterhalter 50 zugewandten Seite des Behälters 80 vorgesehen sein. Der Geber 41 ist dazu eingerichtet, mit einem im Filterhalter 50 vorgesehenen Positionssensor 40 zusammenzuwirken. Der Positionssensor 40 ist dazu eingerichtet, ein Positionssignal auszugeben. Das Positionssignal ist indikativ für eine Position des Durchtrittselements 22.

In der in Fig. 1 gezeigten Ausführungsform ist der Geber mit dem Durchtrittselement 22 gekoppelt, beispielsweise kraft- oder formschlüssig verbunden. Ein Betätigen der Verstelleinrichtung, beispielsweise ein Drehen des Einstellrads 12, führt zu einer Änderung der Position des Durchtrittselements 22 und des Gebers 41. Beispielsweise kann der Geber 41 in gleicher Weise wie das Durchtrittselement 22 durch Drehen des Einstellrads 12 gedreht werden. Ein von dem Positionssensor 40 ausgegebenes Positionssignal kann indikativ für die Drehposition des Gebers 41 und des Durchtrittselements sein. Insbesondere kann das Positionssignal indikativ dafür sein, welche Menge an Wasser durch ein jeweiliges Filterelement einer Vielzahl von Filterelementen strömt.

Der in Fig. 1 gezeigte Wasserfilter 100, insbesondere der Behälter 80, umfasst zumindest zwei Filterelemente mit unterschiedlichen Filterfunktionen. Das erste Filterelement kann einem ersten der hierin beschriebenen Pfade entsprechen, und das zweite Filterelement kann einem zweiten der hierin beschriebenen Pfade entsprechen. Die gezeigte Konfiguration ist beispielhaft und kann beliebig modifizierbar sein. Beispielsweise kann das erste Filterelement den Carboblock 8 umfassen, und das zweite Filterelement das Tauscherharz 9 umfassen. Das erste Filterelement umfasst beispielsweise den Partikelfilter 7 und den Carboblock 8. Das zweite Filterelement umfasst beispielsweise den Partikelfilter 7, den Carboblock 8 und das Tauscherharz 9. Das Durchtrittselement ist dazu eingerichtet, in Abhängigkeit der Position der Verstelleinrichtung die Relation zwischen einer ersten Durchflussrate durch das erste Filterelement und einer zweiten Durchflussrate durch das zweite Filterelement einzustellen. Die Verstelleinrichtung ist dazu eingerichtet, Wasser beispielsweise ausschließlich durch das erste Filterelement fließen zu lassen, Wasser beispielsweise ausschließlich durch das zweite Filterelement fließen zu lassen, oder Wasser in einem beliebig einstellbaren Verhältnis, d.h. einem beliebig einstellbaren Verschnittgrad, anteilig durch das erste Filterelement und das zweite Filterelement fließen zu lassen.

In Ausführungsformen sind der Geber 41 und/oder der Positionssensor 40 dazu eingerichtet, das Positionssignal kontaktlos zu ermitteln. Als kontaktlos kann verstanden werden, dass der Geber 41 von dem Positionssensor 40 beabstandet sein kann. In Fig. 1 ist der Wasserfilter in einer üblichen Betriebskonfiguration gezeigt. Der Behälter 80 ist an dem Filterhalter 50 befestigt. Der Geber 41 ist von dem Positionssensor 40 durch Wandungen des Behälters 50 und/oder des Filterhalters 50 getrennt und von diesem beabstandet. Vorteilhafterweise kann durch das kontaktlose Übermitteln des Positionssignals auf Durchführungen und/oder Kontaktierungen, wie beispielsweise elektrische Kontakte, verzichtet werden.

In Ausführungsformen kann der Geber 41 einen oder mehrere Permanentmagneten umfassen. Der Sensor 40 kann einen Magnetfeldsensor umfassen. Beispielsweise können sich durch die Betätigung der Verstelleinrichtung ein oder mehrere Parameter, wie beispielsweise eine Ausrichtung eines Magnetfelds ändern, sodass die Position des Durchtrittselements anhand der Magnetfeldparameter erfassbar ist.

In Ausführungsformen kann der Geber 41 und/oder der Sensor 40 zur optischen Erfassung der Position eingerichtet sein, beispielsweise als Lichtschranke. In Ausführungsformen kann der Geber 41 und/der der Sensor 40 einen Inkrementalgeber umfassen. In Ausführungsformen kann der Geber 41 und/der der Sensor 40 einen induktiven Geber und/oder Sensor umfassen. In Ausführungsformen kann der Geber 41 und/oder der Sensor 40 einen kapazitiven Geber und/oder Sensor umfassen. In Ausführungsformen kann der Geber 41 einen Transponder, beispielsweise einen RFID-Transponder, und/der der Sensor 40 einen Empfänger für den Transponder umfassen. Beliebige Kombination der genannten Erfassungs- und Übermittlungsmethoden sind möglich.

In Ausführungsformen kann der Wasserfilter 100, insbesondere der Filterhalter 50, eine Auswerteeinrichtung (nicht gezeigt) umfassen. Die Auswerteeinrichtung kann zum Empfangen des Positionssignals eingerichtet sein und/oder mit dem Positionssensor 40 kommunikativ verbunden sein. Die Auswerteeinrichtung kann zur Datenverarbeitung eingerichtet sein. Die Auswerteeinrichtung kann einen Prozessor, beispielsweise einen Microcontroller, einen Speicher und eine in dem Speicher gespeicherte Software mit Instruktionen enthalten, wobei die Software, wenn sie auf dem Prozessor ausgeführt wird, die Auswerteeinrichtung dazu veranlasst, die hierin beschriebenen Funktionen und/oder Verfahren auszuführen.

Die Auswerteeinrichtung kann dazu eingerichtet sein, in Abhängigkeit des Positionssignals einen Verbrauchszustand des mindestens einen Filterelements zu ermitteln. Beispielsweise kann, abhängig von dem Positionssignal, für jedes Filterelement unabhängig voneinander ein Verbrauchswert ermittelt werden. Ein Verbrauchszustand des Wasserfilters 100 bzw. des Behälters 80 kann beispielsweise auf Basis eines oder mehrerer Filterelemente, beispielsweise des Filterelements mit dem höchsten Verbrauchswert ermittelt, angezeigt und/oder ausgegeben werden.

In Ausführungsformen kann die Ermittlung des Verbrauchszustands zeitabhängig erfolgen. Beispielsweise kann ein typischer, allgemeiner Wasserverbrauch in einem Haushalt über einen bestimmten Zeitraum angenommen und/oder eingestellt sein. Beispielsweise kann angenommen werden, dass sich das Filterelement mit dem Tauscherharz 9 nach einer ersten Nutzungsdauer erschöpft und das Filterelement mit dem Carboblock 8 nach einer zweiten, davon unabhängigen Nutzungsdauer erschöpft. Beispielsweise kann angenommen, dass die Erschöpfung bei typischem Verbrauch für das jeweilige Filterelement nach einem effektiven Zeitraum erschöpft, bei dem ein Verschnittgrad von 100 %, d.h. einem effektiven Wasserfluss ausschließlich entlang des Pfades, in dem das Filterelement beinhaltet ist, vorliegt. In Abhängigkeit des Positionssignals kann der Zeitraum, beispielsweise indirekt proportional, angepasst, insbesondere verlängert werden. Beispielsweise kann sich der der Zeitraum bei einem Verschnittgrad von z.B. 50 % verlängern, beispielsweise verdoppeln.

In einer vorteilhaften Weiterbildung kann der Wasserfilter 100 einen Mengensensor zum Messen einer durch den Wasserfilter gefilterten Wassermenge umfassen. Die Wassermenge kann beispielsweise der durch den Eingang 1 einströmenden Wassermenge entsprechen. Der Mengensensor kann ein Flusssensor und/oder ein Durchflusssensor sein. Der Mengensensor kann einen bekannten Durchflusssensor umfassen, beispielsweise einen Ultraschalldurchflusssensor, einen Magnetisch-induktiver Durchflusssensor, einen Vortex-Durchflusssensor, einen Drucksensor, insbesondere einen Differenzdrucksensor, oder andere bekannte Sensortypen. Der Mengensensor kann mit der Auswerteeinrichtung kommunikativ verbunden sein. Der Mengensensor kann dazu eingerichtet sein, die Wassermenge direkt zu bestimmen. Gleichermaßen kann der Mengensensor die entnommene Wassermenge indirekt bestimmen, beispielsweise indem eine typische Durchflussrate für den Wasserfilter 1 angenommen wird und ein nicht genauer bestimmter Fluss, beispielsweise durch einen Druckabfall im Bereich des Eingangs 1, gemessen wird. In der Weiterbildung ist die Auswerteeinrichtung dazu eingerichtet, den Verbrauchszustand auch in Abhängigkeit der Wassermenge zu ermitteln. Beispielsweise kann anstelle oder zusätzlich zu der ersten und/oder zweiten Nutzungsdauer ein nutzbares Volumen und/oder eine nutzbare Wassermenge für die jeweiligen Filterelemente definiert sein. Eine Erschöpfung des jeweiligen Filterelements kann eintreten, sobald das nutzbare Volumen für das jeweilige Filterelement überschritten wurde.

In Ausführungsformen beinhaltet der Behälter 80 einen mit dem Behälter 80 fixiert verbundenen, insbesondere nicht zerstörungsfrei trennbaren, Transponder 30. Der Transponder kann beispielsweise ein RFID-Tag, insbesondere ein für Nahfeldkommunikation eingerichteter Transponder, sein. Der Wasserfilter 100, insbesondere der Filterhalter 50, kann einen zur Kommunikation mit dem Transponder 30 eingerichteten Leser (nicht gezeigt) umfassen. Sowohl der Leser als auch der Transponder 30 können Transceiver sein, d.h. insbesondere sowohl zum Senden als auch Empfangen und/oder zum Lesen als auch Schreiben von Daten eingerichtet sein.

Der Transponder 30 kann dazu eingerichtet sein, Werte in einem in dem Transponder vorgesehenen Speicher zu speichern und ein die Werte umfassendes Transpondersignal zu generieren, durch welches die Werte kommunikativ, insbesondere drahtlos, an den Leser übertragbar sind. Das Transpondersignal kann in Folge einer kommunikativen Verbindung zwischen dem Leser und dem Transponder 30 generiert werden. Insbesondere kann der Leser dazu eingerichtet sein, die Werte abzufragen und/oder die Werte in Folge einer Anfrage durch den Leser von dem Transponder zu empfangen. Der Leser kann mit der Auswerteeinrichtung kommunikativ verbunden sein und/oder in der Auswerteeinrichtung integriert sein, sodass die Werte von der Auswerteeinrichtung empfangbar, auswertbar und/oder nutzbar sind.

Die Werte können eine Behälterkennung umfassen. Bei der Behälterkennung kann es sich beispielsweise um eine eindeutige Seriennummer des Behälters handeln. Alternativ, oder zusätzlich dazu, kann die Behälterkennung weitere Werte, wie beispielsweise ein Produktionsdatum, eine Chargennummer, ein Haltbarkeitsdatum oder dergleichen umfassen.

Die Werte können eine Behältertypenkennung umfassen. Bei der Behältertypenkennung kann es sich beispielsweise um eine eindeutige Identifikationsnummer und/oder -Kennung des Behälters handeln. Die Behältertypenkennung kann dazu geeignet sein, den Behälter 80 beispielsweise dem Filterhalter 50 gegenüber als einen kompatiblen oder nicht-kompatiblen Behältertyp erkennbar zu machen.

Die Werte können Behältereigenschaftswerte umfassen. Die Behältereigenschaftswerte können beispielsweise Informationen darüber enthalten, welche Filterelemente in dem Behälter 50 vorhanden sind. Zusätzlich können die Behältereigenschaftswerte Informationen über zu erwartende Nutzungsdauer und/oder ein zu erwartendes nutzbares Volumen der jeweiligen Filterelemente umfassen. Auf Basis der Behältereigenschaftswerte kann es für die Auswerteeinrichtung möglich sein, den Verbrauch der jeweiligen Filterelemente in Relation zu der zu erwartenden Nutzungsdauer zu ermitteln, um beispielsweise eine Erschöpfung der Filterelemente festzustellen.

Die Werte können Behälterverbrauchswerte umfassen. Die Behälterverbrauchswerte können beispielsweise Informationen darüber enthalten, ob und in welchem Ausmaß ein oder mehrere in dem Behälter 80 vorhandene Filterelemente verbraucht und/oder (teil-)erschöpft sind.

Werte, insbesondere Behältereigenschaftswerte und/oder Behälterverbrauchswerte, können sich während der Nutzung des Wasserfilters 100 ändern. Der Leser kann dazu eingerichtet sein, Werte in den Speicher des Transponders zu schreiben. Beispielsweise können aktualisierte Behälterverbrauchswerte in den Transponder geschrieben werden, um den ist-Zustand des Verbrauchs der Filterelemente zu speichern. Beispielsweise können Behältereigenschaftswerte in den Speicher geschrieben werden, die indikativ dafür sind, dass der Behälter 80 von einem z.B. versiegelten, unbenutzten Neu-Zustand in einen Gebraucht-Zustand übergegangen ist. Beispielsweise können Behältereigenschaftswerde und/oder Behälterverbrauchswerte in den Speicher geschrieben werden, die indikativ dafür sind, dass der Behälter 80, insbesondere ein oder mehrere Filterelemente, teilweise oder vollständig verbraucht und/oder erschöpft sind. Vorteilhafterweise können so auch bei einem Wechsel des Behälters, beispielsweise von einem ersten Filterhalter 50 in einen zweiten Filterhalter 50, die Behältereigenschaftswerte von dem zweiten Filterhalter 50 gelesen und ausgewertet werden.

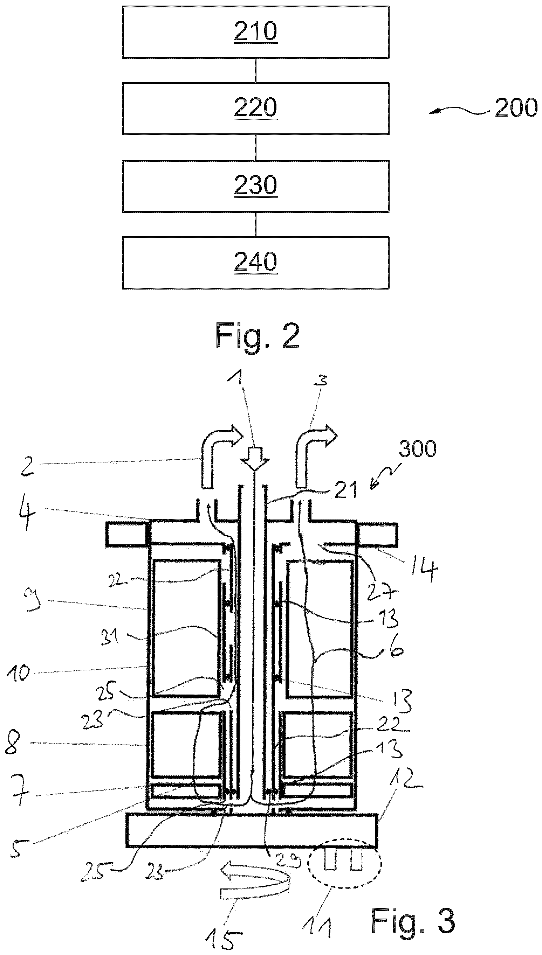

In Fig. 2 ist ein Verfahren 200 zum Betreiben eines Wasserfilters gemäß hierin beschriebenen Ausführungsformen beschrieben. Das Verfahren umfasst das Einstellen 210 einer Position des Durchtrittselements mit der Durchtrittsöffnung relativ zu dem Behälter mit der Behälteröffnung zur Anpassung des Wasserfilters. Die Einstellung kann beispielsweise durch Drehen des Einstellrads 12 erfolgen.

Das Verfahren umfasst das Ermitteln 220 der Position des Durchtrittselements 22 mit dem Positionssensor, insbesondere eine Position des Durchtrittselements 22 in Relation zu einer oder mehreren Behälteröffnung(en) 25 und/oder anderen fixen Bestandteilen des Behälters 80.

Die ermittelte Position kann, beispielsweise in Form eines Positionssignals, an eine Auswerteeinrichtung des Wasserfilters 100 übermittelt und vorzugsweise durch diese ausgewertet werden.

Das Verfahren kann das Erfassen 230 einer durch den Wasserfilter gefilterten Wassermenge umfassen. Beispielsweise kann die Wassermenge durch einen Mengensensor ermittelt werden und/oder auf Basis eines Mengensensor-Signals ermittelt werden. Insbesondere kann das Verfahren das Erfassen der gefilterten Wassermenge, sowie die Ermittlung der über verschiedene Filterelemente gefilterten Wassermengen umfassen, beispielsweise indem die Gesamtwasserfiltermenge auf Basis des Positionssignals anteilig einem jeweiligen Filterelement zugeordnet wird. Die Ermittlung kann durch die Auswerteeinrichtung erfolgen.

Das Verfahren kann, beispielsweise auf Basis der ermittelten gefilterten Wassermenge und/oder der Position des Durchtrittselements, das Ermitteln 240 eines Verbrauchszustands des Wasserfilters umfassen. Der ermittelte Verbrauchszustand kann einem Verbrauch und/oder eine Erschöpfung der in dem Behälter vorgesehenen Filterelemente entsprechen. Insbesondere kann der Verbrauchszustand indikativ dafür sein, dass eines oder mehrere der Filterelemente (teilweise oder vollständig) verbraucht und/oder erschöpft, oder nicht erschöpft sind.

Ein typisches Verfahren 200 umfasst das Einsetzen eines Behälters 80 in den Filterhalter 50, beispielsweise durch einen Nutzer und/oder Endverbraucher. Sofern in dem Behälter 80 ein Transponder vorgesehen ist, kann der Filterhalter 50 Werte von dem Behälter 80 abfragen und beispielsweise den Typ und/oder den Verbrauchszustand des Behälters und/oder der darin vorgesehenen Filterelemente ermitteln.

Vor, oder sogar nach dem Einsetzen des Behälters 80 kann der Nutzer die Verstelleinrichtung zur Einstellung des Wasserfilters betätigen. Beispielsweise kann der Verbraucher den Behälter an die örtlich vorhandene Wasserhärte, oder sonstige individuelle Eigenschaften des vorhandenen Wassers anpassen.

In manchen Ausführungsformen kann der Wasserfilter 100 vorteilhafterweise so genutzt werden, dass je nach Einsatzzweck des entnommenen Wassers entweder vollständig decalzifiziertes und/oder demineralisiertes Wasser, oder verschnittenes Wasser entnommen wird.

Vor und/oder während des Betriebs kann eine im Filterhalter vorgesehene Auswerteeinrichtung die Position des Durchtrittselements mit dem Positionssensor ermitteln bzw. ein Positionssignal von dem Positionssensor empfangen. Unter Verwendung des Positionssignals und optional auch in Abhängigkeit eines Wassermengensignals und/oder von dem Transponder empfangenen Werten kann die Auswerteeinrichtung, beispielsweise in vorgegebenen Intervallen oder bei jeder Nutzung des Wasserfilters, einen Verbrauchszustand des Wasserfilters ermitteln. Bedarfsweise können Werte, wie beispielsweise Behälterverbrauchswerte und/oder Behältereigenschaftswerte, in den Transponder zurückgeschrieben werden.

In Ausführungsformen kann das Verfahren eine zeitliche Prognose der zu erwartenden Erschöpfung des Behälter 80 umfassen, beispielsweise durch Extrapolation von aufgezeichneten Verbrauchswerten in Abhängigkeit der Zeit. Ein Nutzer kann so frühzeitig vor dem Erschöpfen gewarnt und/oder zum Tausch des Behälters 80 aufgefordert werden.

Der Filterhalter 50 kann ein Anzeigemittel, beispielsweise ein Display, eine Leuchtdiode, ein akustischer Signalgeber, oder sogar ein Mittel zur Herstellung einer kommunikativen Verbindung mit einem Kommunikationsgerät, wie etwa einem Smartphone des Nutzers, umfassen. Über das Anzeigemittel kann beispielsweise ein momentaner Verbrauchszustand des Behälters 80 ausgegeben werden, und/oder eine Warnung ausgegeben werden, sobald ein oder mehrere der Filterelemente verbraucht sind.

Zum besseren Verständnis der Erfindung ist in Fig. 3 ein Behälter 300 für einen Wasserfilter gezeigt, der sich von dem erfindungsgemäßen Behälter 80 durch das Fehlen eines Gebers 41 und/oder eines Transponders 30 unterscheidet. Eine gegenüber dem Einstellrad 12 vorgesehene Abdeckung 4 verschließt den Behälter 300. Das Einstellrad ist um eine Achse drehbar, wie durch Pfeil 15 gezeigt. Ein Verbindungsrand 14 ist für die Befestigung des Behälters 300 an einem Filterhalter 80 vorgesehen. Der Behälter 300 umfasst eine Außenwandung 10. Der Behälter 300 weist die Behälteröffnungen 25 auf, die zusammen mit den Durchtrittsöffnungen 23 und den Dichtungen 13 den Pfad 5 und den Pfad 6 definieren. Im Pfad 6 durchströmt das Wasser alle Filterelemente 7, 8, 9, während im Pfad 5 das Wasser das Tauscherharz 9 nicht durchströmt. Die Zuführdichtung 29 dichtet den Zwischenraum zwischen dem Durchtrittselement 22 und dem Zuführelement 21 gegenüber der Zuführung 21 ab. Der Behälter 300 weist mittig entlang einer Mittelachse eine Öffnung auf, welche durch eine Innenwandung 31 begrenzt wird. Zur Anzeige der Filtergüte ist eine Anzeige 11 vorgesehen. In Ausführungsformen können Merkmale des Behälters 300 beliebig mit dem erfindungsgemäßen Behälter kombiniert werden.

Die Erfindung ist nicht auf die zuvor beschriebenen Ausführungsformen beschränkt, vielmehr wird der Umfang der Erfindung durch die beigefügten Ansprüche bestimmt.

## Patentansprüche

1. Wasserfilter (100) zum Filtern von Wasser, insbesondere zum Filtern von Wasser in einem Haushalt und/oder insbesondere zum Filtern von Wasser mit einer maximalen Durchflussrate von 20l/min, umfassend:
einen Filterhalter (50), umfassend einen Positionssensor (40); und
einen mit dem Filterhalter (50) koppelbaren Behälter (80), umfassend:
ein relativ zu einer Behälteröffnung (25) des Behälters (80) bewegbares Durchtrittselement (22) mit einer Durchtrittsöffnung (23);
eine Zuführung (21) zur Zuführung von Wasser zu dem Durchtrittselement (22); und
eine Verstelleinrichtung (12) zum verstellbaren Positionieren des Durchtrittselements (22) mit der Durchtrittsöffnung (23) relativ zu dem Behälter (80) mit der Behälteröffnung (25);
einen Geber (41), wobei der Geber (41) für ein Zusammenwirken mit dem Positionssensor (40) eingerichtet ist, so dass der Positionssensor (40) eingerichtet ist, um ein Positionssignal auszugeben, welches indikativ für eine Position des Durchtrittselements (22) mit der Durchtrittsöffnung (23) ist;
ein erstes Filterelement (7, 8) mit einer ersten Filterfunktion;
ein zweites Filterelement (7, 8, 9) mit einer von der ersten Filterfunktion unterschiedlichen zweiten Filterfunktion; wobei
das Durchtrittselement (22) dazu eingerichtet ist, in Abhängigkeit der Position der Verstelleinrichtung (12) die Relation zwischen einer ersten Durchflussrate durch das erste Filterelement und einer zweiten Durchflussrate durch das zweite Filterelement einzustellen; wobei
die erste Durchflussrate und die zweite Durchflussrate in einem beliebig einstellbaren Verhältnis einstellbar sind.

2. Wasserfilter (100) gemäß Anspruch 1, wobei der Behälter (80) zumindest ein Filterelement (7, 8, 9) umfasst.

3. Wasserfilter (100) gemäß einem der vorangehenden Ansprüche, wobei der Geber (41) und/oder der Positionssensor (40) dazu eingerichtet sind, das Positionssignal kontaktlos zu ermitteln.

4. Wasserfilter (100) gemäß einem der vorangehenden Ansprüche, wobei der Geber (41) einen Permanentmagneten umfasst, und wobei der Positionssensor (40) einen Magnetfeldsensor umfasst.

5. Wasserfilter (100) gemäß einem der Ansprüche 2 bis 4, umfassend eine Auswerteeinrichtung, die dazu eingerichtet ist, in Abhängigkeit des Positionssignals einen Verbrauchszustand des mindestens einen Filterelementes (7, 8, 9) zu ermitteln.

6. Wasserfilter (100) gemäß Anspruch 5, umfassend einen mit der Auswerteeinrichtung verbundenen Mengensensor zum Messen einer durch den Wasserfilter gefilterten Wassermenge, wobei die Auswerteeinrichtung dazu eingerichtet ist, den Verbrauchszustand auch in Abhängigkeit der Wassermenge zu ermitteln.

7. Wasserfilter (100) gemäß einem der vorangehenden Ansprüche, weiterhin umfassend:
einen mit dem Behälter (80) fixiert verbunden Transponder (30);
einen Leser zum Empfangen eines von dem Transponder (30) gesendeten Transpondersignals.

8. Wasserfilter (100) gemäß Anspruch 7, wobei
das Transpondersignal zumindest eines der folgenden umfasst:
- eine Behälterkennung;
- eine Behältertypenkennung;
- einen oder mehrere Behältereigenschaftswerte;
- einen oder mehrere Behälterverbrauchswerte.

9. Wasserfilter (100) gemäß Anspruch 7 oder 8, wobei der Leser dazu eingerichtet ist, Werte, insbesondere Behältereigenschaftwerte und/oder Behälterverbrauchswerte, in einen Speicher des Transponders (30) zu schreiben.

10. Wasserfilter (100) gemäß einem der Ansprüche 7 bis 9, wobei der Transponder (30) ein für Nahfeldkommunikation eingerichteter Transponder ist, insbesondere ein RFID-Tag.

11. Wasserfilter (100) gemäß einem der vorangehenden Ansprüche, wobei die Verstelleinrichtung (12) eingerichtet ist, um das Durchtrittselement (22) relativ zu der Behälteröffnung (25) durch Drehung um eine Achse verstellbar zu positionieren.

12. Verfahren (200) zum Betreiben eines Wasserfilters (100) gemäß einem der vorangehenden Ansprüche, umfassend:
Einstellen (210) einer Position des Durchtrittselements (22) mit der Durchtrittsöffnung (23) relativ zu dem Behälter (80) mit der Behälteröffnung (25) zur Anpassung des Wasserfilters;
Ermitteln (220) der Position des Durchtrittselements (22) mit dem Positionssensor (40).

13. Verfahren (200) gemäß Anspruch 12, umfassend:
Erfassen (230) einer durch den Wasserfilter (100) gefilterten Wassermenge;
Ermitteln (240) eines Verbrauchszustands des Wasserfilters (100) in Abhängigkeit der gefilterten Wassermenge und der Position des Durchtrittselements (22).

14. Verfahren (200) gemäß Anspruch 13, wobei das Ermitteln (240) des Verbrauchszustands des Wasserfilters auch zeitabhängig erfolgt.

15. Verfahren (200) gemäß einem der Ansprüche 12 bis 14, umfassend:
Abfragen von Werten von dem Behälter (80).
